# EUROPÄISCHE PATENTANMELDUNG

(11) **EP 3 928 914 A1**
(43) Veröffentlichungstag der Anmeldung: **29.12.2021**
(21) Anmeldenummer: 20182252.5
(22) Anmeldetag: 25.06.2020
(51) Int. Cl.: B23K 26/06, B23K 26/70

(54) **LASERBEARBEITUNGSKOPF MIT ÜBERWACHTER SCHWENKEINHEIT ZUM WECHSELN VON KOLLIMATIONSLINSEN**

(71) Anmelder: TRUMPF Werkzeugmaschinen GmbH + Co. KG, 71254 Ditzingen (DE)
(72) Erfinder: VEES, Dominik, 72074 Tübingen (DE); PAUL, Axel, 71254 Ditzingen/Heimerdingen (DE); MILICH, Andreas, 71282 Hemmingen (DE); HUBER, Alexander, 75417 Mühlacker (DE); PFLÜGER, Sven, 70839 Gerlingen (DE)
(74) Vertreter: Kohler Schmid Möbus Patentanwälte

(57) **Zusammenfassung**

Ein Laserbearbeitungskopf (30), umfassend
- ein Strahlführungsgehäuse (111) für einen sich entlang einer Strahlachse (LA) ausbreitenden Laserstrahl (5),
- eine Schwenkeinheit (112), umfassend eine Schwenkwelle (41) und einen Schwenkrahmen (6), der starr an der Schwenkwelle (41) befestigt ist und der im Strahlführungsgehäuse (111) angeordnet ist,
- einen Einstellmechanismus (34), mit dem die Schwenkeinheit (112) gegenüber dem Strahlführungsgehäuse (111) um die Schwenkwelle (41) gedreht werden kann,
- wenigstens zwei Kollimationslinsen (2, 9), die am Schwenkrahmen (6) befestigt sind, und die durch Drehen der Schwenkeinheit (112) wahlweise in die Strahlachse (LA) des Laserstrahls (5) gebracht werden können,
- und wenigstens eine Fokussierlinse (102) in der Strahlachse (LA) des Laserstrahls (5), ist dadurch gekennzeichnet,
dass der Laserbearbeitungskopf (30) eine Überwachungseinrichtung (106) aufweist, mit der eine Temperatur der Schwenkeinheit (112) messbar ist. Die Erfindung stellt einen Laserbearbeitungskopf bereit, mit dem insbesondere bei hoher Laserleistung mögliche Ungenauigkeiten in der Laserbearbeitung oder eine mögliche Lebensdauerverkürzung oder Beschädigung des Laserbearbeitungskopfs frühzeitig erkannt und gegebenenfalls verhindert werden können.

## Beschreibung

Die Erfindung betrifft einen Laserbearbeitungskopf, umfassend
- ein Strahlführungsgehäuse für einen sich entlang einer Strahlachse ausbreitenden Laserstrahl,
- eine Schwenkeinheit, umfassend eine Schwenkwelle und einen Schwenkrahmen, der starr an der Schwenkwelle befestigt ist und der im Strahlführungsgehäuse angeordnet ist,
- einen Einstellmechanismus, mit dem die Schwenkeinheit gegenüber dem Strahlführungsgehäuse um die Schwenkwelle gedreht werden kann,
- wenigstens zwei Kollimationslinsen, die am Schwenkrahmen befestigt sind, und die durch Drehen der Schwenkeinheit wahlweise in die Strahlachse des Laserstrahls gebracht werden können,
- und wenigstens eine Fokussierlinse in der Strahlachse des Laserstrahls.

Ein solcher Laserbearbeitungskopf ist aus der DE 10 2014 209 308 A1 bekannt geworden.

Laserbearbeitungsköpfe werden in vielfältiger Weise zur präzisen Bearbeitung von Werkstücken eingesetzt, etwa zum Schneiden oder Verschweißen von Werkstücken.

Je nach Bearbeitungsaufgabe können dabei unterschiedliche Strahldurchmesser eines Laserstrahls benötigt werden. Die DE 10 2014 209 308 A1 schlägt zur Veränderung des Strahldurchmessers vor, einen Laserbearbeitungskopf mit einem Linsenwechselsystem einzusetzen. Auf einem verschwenkbaren Rahmen sind zwei Kollimationslinsen des Laserbearbeitungskopfs angeordnet, die wahlweise in die Strahlachse eines Laserstrahls eingeschwenkt werden können.

Während der Verwendung eines Laserbearbeitungskopfes kommt es in gewissem Umfang zu Reflexion und Streuung von Laserlicht im Laserbearbeitungskopf, wodurch sich der Laserbearbeitungskopf merklich erwärmen kann. Reflexion und Streuung werden insbesondere durch Verunreinigungen im Strahlengang des Laserstrahls oder auch durch optische Bauteile (Linsen, Schutzgläser) verursacht, die für die eingesetzte Wellenlänge der Laserstrahlung eine zu hohe Reflektivität aufweisen, beispielsweise durch eine mangelhafte Ausführung einer Antireflexschicht. Eine Erwärmung des Laserbearbeitungskopfes kann zu ungenauer Werkstückbearbeitung, etwa durch eine thermische Drift des Fokuspunkts, führen. Ebenso kann durch die thermische Belastung die Lebensdauer des Laserbearbeitungskopfs reduziert werden.

Durch Kühlung dann die Temperatur von Laserbearbeitungsköpfen während der Bearbeitung grundsätzlich stabilisiert und begrenzt werden.

### Aufgabe der Erfindung

Es ist Aufgabe der Erfindung, einen Laserbearbeitungskopf bereitzustellen, mit dem insbesondere bei hoher Laserleistung mögliche Ungenauigkeiten in der Laserbearbeitung oder eine mögliche Lebensdauerverkürzung oder Beschädigung des Laserbearbeitungskopfs frühzeitig erkannt und gegebenenfalls verhindert werden können.

### Beschreibung der Erfindung

Diese Aufgabe wird auf überraschend einfache, aber wirkungsvolle Art gelöst durch einen Laserbearbeitungskopf der eingangs genannten Art, der dadurch gekennzeichnet ist, dass der Laserbearbeitungskopf eine Überwachungseinrichtung aufweist, mit der eine Temperatur der Schwenkeinheit messbar ist.

Die Erfindung sieht vor, die Temperatur der Schwenkeinheit des Laserbearbeitungskopfes mit der Überwachungseinrichtung zu überwachen. Die Erfinder haben festgestellt, dass sich die Überwachung der Temperatur der Schwenkeinheit gut dafür eignet, den Laserbearbeitungskopf insgesamt, insbesondere dessen Präzision und Betriebssicherheit, zu überwachen. Eine lokale Betriebsstörung oder Überhitzung im Laserbearbeitungskopf, die beispielsweise durch Verschmutzungen oder durch ein Schutzglas mit zu hohem Reflexionsgrad verursacht wird, führt stets auch zu einem signifikanten Temperaturanstieg an der Schwenkeinheit, so dass die Überwachung der Schwenkeinheit besonders aussagekräftig ist.

Die Schwenkeinheit kann aufgrund ihrer Drehbarkeit (und ggf. auch Verfahrbarkeit) im Wesentlichen nur indirekt gekühlt werden, was dazu beiträgt, dass dieses Bauteil eine durch (ungewollt hohe) Streuung oder Reflexion eingebrachte Wärmeenergie durch einen raschen Temperaturanstieg unverzüglich anzeigt.

Sollte an der Schwenkeinheit eine ungewöhnlich hohe bzw. zu hohe Temperatur registriert werden, können Gegenmaßnahmen ergriffen werden, insbesondere als kurzfristige Maßnahme eine zeitweilige (bevorzugt automatische) Abschaltung des Laserstrahls. Dadurch kann insbesondere eine Beschädigung oder gar Zerstörung des Laserbearbeitungskopfs zuverlässig verhindert werden. Gegebenenfalls können dann auch weitere Maßnahmen ergriffen werden, etwa eine Reinigung des Laserbearbeitungskopfes und/oder ein Austausch von nicht (mehr) ausreichend guten optischen Bauteilen, um die Streuung und/oder Reflexion von Laserstrahlung im Laserbearbeitungskopf zu verringern. Insgesamt kann mittels solcher Maßnahmen die thermische Belastung des Laserbearbeitungskopfs im Rahmen der Erfindung verringert werden.

Die Überwachung der Temperatur der Schwenkeinheit kann grundsätzlich mit beliebigen Typen von Temperatursensoren erfolgen. Bevorzugt erfolgt die Temperaturüberwachung der Schwenkeinheit berührungslos.

Bevorzugt kann mit dem Einstellmechanismus die Schwenkeinheit gegenüber dem Strahlführungsgehäuse auch in einer Richtung parallel zur Strahlachse verfahren werden, insbesondere um den Abstand einer Kollimationslinse zu einem Austrittsende einer Lichtleitfaser einzustellen. Hierfür kann der Laserbearbeitungskopf so ausgebildet sein, dass der Einstellmechanismus umfasst
- einen gegenüber dem Strahlführungsgehäuse verfahrbaren Schlitten, wobei die Schwenkwelle am Schlitten drehbar gelagert ist,
- einen mit dem Schlitten nicht verfahrenden, motorisch ein- und ausfahrbaren Bolzen, und
- eine an der Schwenkeinheit ausgebildete oder befestigte Kopplungseinrichtung, umfassend eine Gabel oder ein Langloch, in das oder die der Bolzen ein- und ausfahren kann.

### Bevorzugte Ausführungsformen des erfindunasaemäßen Laserbearbeitungskopfes

Bei einer bevorzugten Ausführungsform des erfindungsgemäßen Laserbearbeitungskopfs misst die Überwachungseinrichtung eine lokale Temperatur am Schwenkrahmen. Der Schwenkrahmen ist nahe an der Strahlachse des Laserstrahls (in der Regel um diese herum) angeordnet, so dass der Schwenkrahmen als ein zentrales Bauteil besonders aussagekräftig für den Laserbearbeitungskopf als Ganzes ist. Der Schwenkrahmen ist insbesondere nur über die Schwenkwelle über einen Festkörper-Wärmeleitungspfad an eine etwaige Kühlung gekoppelt. Letzteres macht die Überwachung des Schwenkrahmens besonders aussagekräftig; zudem ist der Schwenkrahmen besonders durch eine Überhitzung gefährdet.

Besonders bevorzugt ist eine Ausführungsform, bei der die Überwachungseinrichtung einen berührungslos messenden Temperatursensor aufweist, insbesondere einen Thermopile-Sensor. Dies vereinfacht die Temperaturmessung an der Schwenkeinheit erheblich; es muss keine elektrische Verschaltung über die Drehmechanik (oder gar eine Dreh- und Verfahrmechanik) erfolgen. Zudem ist die berührungslose Messung gegenüber einer taktilen Messung auch platzsparend, insbesondere an der Schwenkeinheit selbst. Ein Thermopile-Sensor hat sich in der Praxis besonders bewährt.

Bei einer bevorzugten Weiterbildung dieser Ausführungsform ist vorgesehen, dass der berührungslos messende Temperatursensor auf eine geschwärzte Messoberfläche an der Schwenkeinheit gerichtet ist, insbesondere wobei die Schwenkeinheit im Übrigen ganz oder teilweise vergoldet ist. Durch die geschwärzte Messoberfläche kann die Messung von Wärmestrahlung aus der Schwenkeinheit verbessert werden. Insbesondere kann der (lokale) Emissionsgrad auf 0,7 oder mehr, bevorzugt 0,8 oder mehr, besonders bevorzugt 0,9 oder mehr erhöht werden. Mit einer Goldbeschichtung der Schwenkeinheit im Übrigen kann die Absorption von energiereicher, langwelliger Wärmestrahlung in der Schwenkwelle und im Schwenkrahmen minimiert werden; die Wärmestrahlung geht dann vermehrt in das leichter zu kühlende Strahlführungsgehäuse ein. Bevorzugt ist die geschwärzte Messoberfläche im Bereich der Drehachse der Schwenkwelle ausgebildet, so dass die Drehstellung der Schwenkeinheit die Position der geschwärzten Messoberfläche nicht beeinflusst, was wiederum die Temperaturmessung vereinfacht.

Besonders bevorzugt ist die geschwärzte Messoberfläche durch Schwarz-Signieren mit einem Ultrakurzpuls-Laser erzeugt. Durch das Schwarz-Signieren kann eine schwarze, nicht ausgasende, und sehr glatte Messoberfläche erzeugt werden, die leicht zu reinigen ist, insbesondere auch in Waschanlagen.

Besonders bevorzugt ist eine Ausführungsform, bei der mit der Überwachungseinrichtung weiterhin gestreute Laserstrahlung im Strahlführungsgehäuse im Bereich der Schwenkeinheit messbar ist. Die Messung von gestreuter Laserstrahlung (einschließlich reflektierter Laserstrahlung) mit einem Photosensor, etwa einer Photodiode, ist im Vergleich zur eher trägen Temperaturmessung sehr schnell, so dass eine hohe bzw. zu hohe Streulicht-Intensität (etwa durch eine plötzliche Verschmutzung) sehr schnell erkannt wird. Dadurch kann reagiert werden (etwa mit einer Abschaltung des Laserstrahls), bevor es zu einer beschädigungsträchtigen Erwärmung im Laserbearbeitungskopf kommt. Die Überwachungseinrichtung kann eine Testlichtquelle, insbesondere eine LED, aufweisen, mit der die Funktion der Überwachungseinrichtung bezüglich der Detektion von gestreutem Laserlicht getestet werden kann. Durch die Kombination von Temperaturmessung und Streulichtmessung kann eine besonders zuverlässige Überwachung des Laserbearbeitungskopfs erfolgen.

Bevorzugt ist eine Weiterbildung dieser Ausführungsform, bei der die Überwachungseinrichtung einen Photosensor aufweist, der direkt oder indirekt auf den Schwenkrahmen, insbesondere auf einen Innenraum des Schwenkrahmens, gerichtet ist. Im Bereich des nahe an der Strahlachse angeordneten Schwenkrahmens, insbesondere im Schwenkrahmen, sind kaum Abschattungen zu erwarten und gestreutes (und reflektiertes) Laserlicht kann besonders aussagekräftig überwacht werden.

Vorteilhaft ist eine Weiterbildung, die vorsieht, dass das Strahlführungsgehäuse eine Bohrung aufweist, in die ein Lichtleiter eingesetzt und abdichtend verklebt ist, und dass mit der Überwachungseinrichtung die gestreute Laserstrahlung durch den Lichtleiter hindurch messbar ist. Dadurch kann der Photosensor und eine zugehörige Elektronik abgetrennt vom Laserstrahl außerhalb des Strahlführungsgehäuses angeordnet werden. Der Innenraum des Strahlführungsgehäuses kann besonders sauber gehalten werden.

Bei einer bevorzugten Ausführungsform ist vorgesehen, dass der Laserbearbeitungskopf eine erste Kühleinheit und eine zweite Kühleinheit aufweist, dass die erste Kühleinheit zwischen einem unteren Teil des Strahlführungsgehäuses, der die wenigstens eine Fokussierlinse, ein Schutzglas und eine Laseraustrittsdüse umfasst, und einem oberen Teil des Strahlführungsgehäuses, der die Überwachungseinrichtung und die Schwenkeinheit umfasst, angeordnet ist, und dass die zweite Kühleinheit an einer Außenseite des oberen Teils des Strahlführungsgehäuses angeordnet ist. Mit der ersten Kühleinheit kann dem unteren Teil des Laserbearbeitungskopfs Wärme entzogen werden; dies kann sowohl intern erzeugte Wärme (durch Reflexion und/oder Streuung an den dortigen optischen Elementen), als auch von außen aufgenommene Energie aus dem Bearbeitungsprozess (etwa Schneidprozess) am Werkstück, der Umgebung, oder der Laseraustrittsdüse umfassen. Die zweite Kühleinheit führt hauptsächlich intern erzeugte Wärme ab (direkt aus dem oberen Teil des Strahlführungsgehäuses, und indirekt über Wärmestrahlung aus der Schwenkeinheit, an der die Kollimationslinsen angeordnet sind). Durch die beiden Kühleinheiten kann insgesamt eine vergleichsweise hohe Laserleistung genutzt werden, ohne dass es zu einer übermäßigen Überhitzung des Laserbearbeitungskopfes kommt. Man beachte, dass die erste Kühleinheit alternativ auch in den unteren Teil des Strahlführungsgehäuses eingebaut werden kann, und dann den unteren Teil in einen unteren Abschnitt und einen oberen Abschnitt unterteilt und diese Abschnitte thermisch voneinander trennt.

Bevorzugt ist eine Weiterbildung dieser Ausführungsform, bei der die erste Kühleinheit im Wesentlichen plattenförmig ausgebildet ist und sich über den gesamten Querschnitt des Strahlführungsgehäuses senkrecht zur Strahlachse, mit Ausnahme eines Durchbruchs für den Laserstrahl, erstreckt. Dadurch kann ein Wärmeeintrag aus dem unteren Teil in den oberen Teil weitegehend unterbunden werden, und ein Wärmeeintrag in die nur schwierig zu kühlende Schwenkeinheit wird reduziert.

Vorteilhaft ist auch eine Weiterbildung, die vorsieht,
dass die zweite Kühleinheit an einer Seitenfläche des Strahlführungsgehäuses angeordnet ist, insbesondere gegenüberliegend zum Einstellmechanismus, und dass die zweite Kühleinheit in Richtung der Strahlachse zumindest mit einem Teil des Schwenkrahmens, und bevorzugt auch zumindest mit einem Teil einer jeweiligen in die Strahlachse geschwenkten Kollimationslinse, überlappt. Diese Anordnung hat sich als besonders effizient erwiesen, und kann insbesondere Wärmestrahlung aus der Schwenkeinheit und der aktiven Kollimationslinse gut aufnehmen. Die Anordnung der zweiten Kühleinheit gegenüber dem Einstellmechanismus ist besonders kompakt. Die zweite Kühleinheit kann für eine verbesserte Effizienz auch mehrere Seitenflächen des Strahlführungsgehäuses umspannen, beispielsweise alle drei Seitenflächen, die nicht dem Einstellmechanismus zugewandt sind.

Bevorzugt ist zudem eine Weiterbildung, bei der die beiden Kühleinheiten mit Wasser gekühlt sind, insbesondere wobei die beiden Kühleinheiten in Reihe geschaltet sind. Die Wasserkühlung ist leistungsstark und kostengünstig. Eine Reihenschaltung ist zudem besonders einfach einzurichten, und reduziert bei ausreichendem Durchfluss die Kühlleistung nicht.

Bevorzugt ist weiterhin eine Ausführungsform, bei der der Einstellmechanismus umfasst
- zwei Anschläge für zwei Drehpositionen der Schwenkeinheit, in denen jeweils eine der Kollimationslinsen in die Strahlachse des Laserstrahls eingeschwenkt ist, und
- Fixiermittel, insbesondere magnetische Fixiermittel, mit denen die Schwenkeinheit in den beiden Drehpositionen fixiert werden kann. Die beiden Drehpositionen können genau und zuverlässig eingestellt werden, um die beiden Kollimationslinsen zu nutzen.

In den Rahmen der vorliegenden Erfindung fällt auch die Verwendung eines erfindungsgemäßen, oben beschriebenen Laserbearbeitungskopfs,
wobei ein Laserstrahl in den Laserbearbeitungskopf eingespeist wird und mit dem Laserbearbeitungskopf auf ein zu bearbeitendes Werkstück gerichtet wird, wobei mit der Überwachungseinrichtung eine Temperatur der Schwenkeinheit überwacht wird, und wobei der Laserstrahl abgeschaltet wird, wenn die Temperatur der Schwenkeinheit einen vorgegebenen Temperatur-Grenzwert übersteigt. Dadurch können Beschädigungen am Laserbearbeitungskopf zuverlässig vermieden werden, und allgemein kann die Lebensdauer des Laserbearbeitungskopfs erhöht werden. Ebenso können unpräzise Werkstückbearbeitungen vermieden werden. Die Laserbearbeitung kann wieder begonnen werden, wenn sich die Temperatur wieder deutlich reduziert hat, beispielsweise unter einen weiteren Temperatur-Grenzwert, und/oder wenn eine Maßnahme zur Reduzierung von Streuung oder Reflexion der Laserstrahlung getroffen wurde, etwa eine Reinigung des Laserbearbeitungskopfs durchgeführt wurde, oder ein nicht (mehr) brauchbares optisches Bauteil ausgetauscht wurde.

Vorteilhaft ist auch eine Variante der erfindungsgemäßen Verwendung,
wobei mit der Überwachungseinrichtung auch eine Stärke von gestreutem Laserlicht im Strahlführungsgehäuse überwacht wird, und wobei der Laserstrahl ebenfalls abgeschaltet wird, wenn eine gemessene Stärke von gestreutem Laserlicht einen vorgegebenen Streulicht-Grenzwert übersteigt. Durch die Überwachung des gestreuten Laserlichts (einschließlich reflektiertem Laserlicht) kann eine noch zuverlässigere und bezüglich des Erkennens von Betriebsstörungen oft noch schnellere Überwachung des Laserbearbeitungskopfs erfolgen. Ebenfalls vorteilhaft sind Varianten, bei denen unterschiedliche Maßnahmen ausgelöst werden, je nachdem, ob nur von einem oder von beiden unterschiedlichen Sensoren eine Grenzwertüberschreitung festgestellt wird.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt in einem schematischen Längsschnitt eine vereinfachte, erste Ausführungsform eines erfindungsgemäßen Laserbearbeitungskopfs;
- Fig. 2a: zeigt in einem schematischen Längsschnitt eine detailliertere, zweite Ausführungsform eines erfindungsgemäßen Laserbearbeitungskopfs, im Bereich des oberen Teils des Strahlführungsgehäuses;
- Fig. 2b: zeigt in einer schematischen Perspektivansicht eine erste Kühleinheit für einen erfindungsgemäßen Laserbearbeitungskopf;
- Fig. 3: zeigt eine schematische perspektivische Außenansicht einer dritten Ausführungsform eines erfindungsgemäßen Laserbearbeitungskopfs;
- Fig. 4: zeigt den Laserbearbeitungskopf von Fig. 3 in einer schematischen Perspektivansicht im Bereich des Linsenwechselsystems für die Kollimationslinse, mit teilweise entferntem Gehäuse;
- Fig. 5: eine schematische Querschnittsdarstellung des Linsenwechselsystems von Fig. 4, jedoch ohne Kurzhubzylinder;
- Fig. 6: eine schematische Aufsicht auf das Linsenwechselsystem von Fig. 4;
- Fig. 7: den Laserbearbeitungskopf von Fig. 4 in einer schematischen Perspektivansicht, mit gegenüber Fig. 4 um 90° verdrehter Gabel.

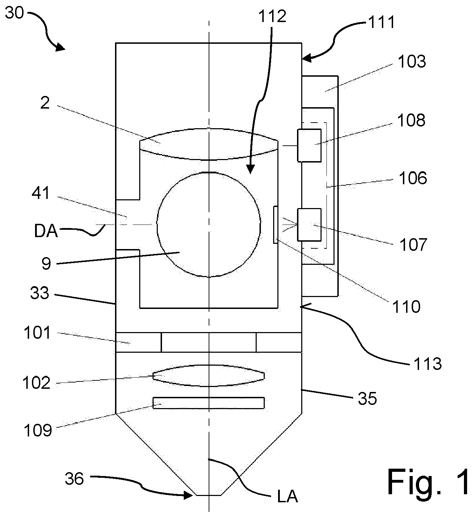

Die **Fig. 1** zeigt in einer schematischen Längsschnitt-Darstellung eine beispielhafte, erste Ausführungsform eines erfindungsgemäßen Laserbearbeitungskopfes 30. Der Laserbearbeitungskopf 30 ist hier als ein Schneidkopf für eine Schneidbearbeitung eines zu bearbeitenden Werkstücks, etwa eines Blechs, ausgebildet.

In einem Strahlführungsgehäuse 111 kann entlang einer Strahlachse (auch genannt Laserstrahlachse) LA ein Laserstrahl (nicht näher dargestellt) propagieren. Der von oben eintretende, divergente Laserstrahl wird ein einer Kollimationslinse 2 kollimiert, von einer Fokussierlinse 102 fokussiert und trifft nach Passieren eines Schutzglases 109 und einer Laseraustrittsdüse (auch einfach genannt Düse) 36 auf ein unter dem Laserbearbeitungskopf 30 angeordnetes, zu bearbeitendes Werkstück (letzteres nicht näher dargestellt).

Die Kollimationslinse 2 ist auf einem Schwenkrahmen 6 befestigt, der starr an einer Schwenkwelle 41 befestigt ist, die um eine Drehachse DA drehbar ist. Der Schwenkrahmen 6 und die Schwenkwelle 41 werden zusammen als Schwenkeinheit 112 bezeichnet. Die Drehachse DA verläuft senkrecht zur Strahlachse LA. Auf dem Schwenkrahmen 6 ist auch eine weitere Kollimationslinse 9 befestigt, die (bezüglich der Drehachse DA) um 90° gedreht zur Kollimationslinse 2 angeordnet ist. Entsprechend können durch Drehen der Schwenkeinheit 112 die Kollimationslinsen 2, 9 im Strahlengang des Laserstrahls bzw. in der Strahlachse LA getauscht werden ("Linsenwechselsystem").

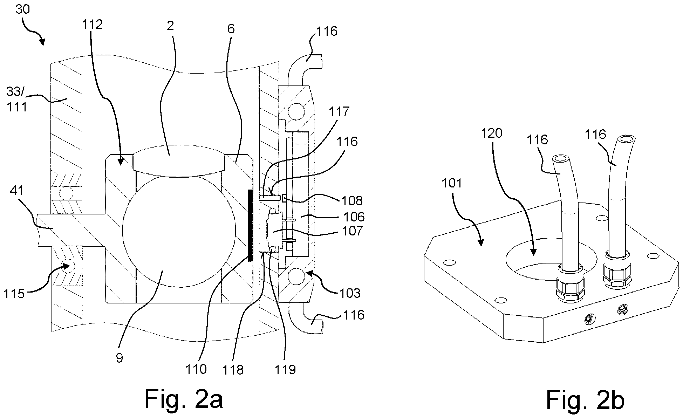

Die Schwenkeinheit 112 ist in einem oberen Teil 33 des Strahlführungsgehäuses 111 angeordnet. Die Fokussierlinse 102 und das Schutzglas 109 sind in einem unteren Teil 35 des Strahlführungsgehäuses 111 angeordnet, an welchem auch die Düse 36 ausgebildet ist. Zwischen dem oberen Teil 33 und dem unteren Teil ist eine plattenförmige, senkrecht zur Strahlachse LA ausgerichtete, erste Kühleinheit 101 angeordnet (siehe dazu auch Fig. 2b).

Der Laserbearbeitungskopf 30 verfügt über eine Überwachungseinrichtung 106, mit der eine ordnungsgemäße Funktion des Laserbearbeitungskopfs 30 überwacht wird.

Die Überwachungseinrichtung 106 verfügt über einen berührungslos arbeitenden Temperatursensor 107, hier vom Typ Thermopile, der auf eine geschwärzte Messoberfläche 110 am Schwenkrahmen 6 gerichtet ist. Mit dem Temperatursensor 107 kann Wärmestrahlung von der Messoberfläche 110 gemessen werden, mit der auf die Temperatur der Schwenkeinheit 112 geschlossen werden kann. Der Temperatursensor 107 und die geschwärzte Messoberfläche 110 sind im Bereich (und bevorzugt auf) der Drehachse DA angeordnet, so dass unabhängig von der Drehstellung der Schwenkeinheit der Temperatursensor stets auf die geschwärzte Messoberfläche 110 gerichtet ist. Mit Ausnahme der geschwärzten Messoberfläche 110 sind die Oberfläche des Schwenkrahmens 6 und die Oberfläche der Schwenkwelle 41, soweit diese innerhalb des Strahlführungsgehäuses liegt, vergoldet.

Weiterhin verfügt die Überwachungseinrichtung 106 hier über einen Photosensor 108 (etwa eine Photodiode), der in das Innere des oberen Teils 33 des Strahlführungsgehäuses 111 und insbesondere zumindest auf einen Teil des Schwenkrahmens 6 gerichtet ist. Der Photosensor 108 überwacht somit vor allem den Kollimationsbereich des Laserbearbeitungskopfs 30 auf gestreutes Laserlicht (einschließlich reflektiertes Laserlicht). Der Photosensor 108 ist hier bezüglich der Strahlachse LA ungefähr auf der Höhe der in die Strahlachse LA eingeschwenkten Kollimationslinse 2 angeordnet und blickt auf diese.

Mit dem Photosensor 108 kann gestreutes oder reflektiertes Laserlicht im Inneren des oberen Teils 33 des Strahlführungsgehäuses 111 registriert werden; eine hohe Streulichtstärke führt grundsätzlich zu einer allmählichen Erwärmung des Laserbearbeitungskopfs 30 und ist ein Hinweis auf eine nicht ordnungsgemäße Funktion des Laserbearbeitungskopfs 30, beispielsweise infolge von Verschmutzungen im Laserbearbeitungskopf 30 oder infolge eines Einbaus eines ungeeigneten Schutzglases 109, das die eingesetzte Laserwellenlänge zu stark reflektiert. Die nicht ordnungsgemäße Funktion kann durch den Photosensor 108 über die überwachte Streulichtstärke frühzeitig erkannt werden, insbesondere bevor eine Beschädigung durch eine zu starke Erwärmung eingetreten ist.

Die Überwachungseinrichtung 106 ist hier an der Rückseite 113 des Strahlführungsgehäuses 111 angeordnet, gegenüber der Seite, an der die Schwenkwelle 41 in das Strahlführungsgehäuse 111 führt (also der Einstellmechanismus angeordnet ist).

An einer der parallel zur Strahlachse LA liegenden Seitenflächen des Strahlführungsgehäuses 111, hier wiederum an der Rückseite 113, ist eine zweite Kühleinheit 103 angeordnet. Diese übergreift bezüglich der Strahlachse LA den größten Teil des Schwenkrahmens 6, und hier auch die in die Strahlachse LA eingeschwenkte Kollimationslinse 2. Zudem übergreift die zweite Kühleinheit 103 die Überwachungseinrichtung 106.

Mittels der ersten Kühleinheit 101 und der zweiten Kühleinheit 103 kann die thermische Belastung des Schwenkrahmens 6 sowie der auf diesem gelagerten Kollimationslinsen 2, 9 und deren Fassungen niedrig gehalten werden, obwohl die Schwenkeinheit 112 nicht direkt, sondern im Wesentlichen nur indirekt gekühlt wird (vor allem über Wärmestrahlung, in geringem Umfang auch über Gaskonvektion im Inneren des Strahlführungsgehäuses 111 und Berührung am Lager der Schwenkwelle 41).

Mit der Überwachungseinrichtung 106 kann eine nicht ordnungsgemäße Funktion des Laserbearbeitungskopfs 30, insbesondere eine über einem vorgegebenen Temperatur-Grenzwert liegende Temperatur der Schwenkeinheit 112 oder eine über einem vorgegebenen Streulicht-Grenzwert liegende Stärke von gestreutem (einschließlich reflektiertem) Laserlicht festgestellt werden, bevor es zu einer Beschädigung am Laserbearbeitungskopf 30 kommt (etwa wegen Überhitzung) und/oder Werkstücke unpräzise bearbeitet werden (insbesondere außerhalb zulässiger Fertigungstoleranzen, "Ausschuss"). Dafür kann die Überwachungseinrichtung 106 mit einer elektronischen Steuereinrichtung bzw. Maschinensteuerung (nicht näher dargestellt) verbunden sein, die den Laserstrahl automatisch abschaltet, wenn mit der Überwachungseinrichtung 106 eine nicht ordnungsgemäße Funktion des Laserbearbeitungskopfs 30 festgestellt wird. Zusätzlich kann eine Alarmmeldung ausgegeben werden, um eine Wartung (insbesondere Reinigung) oder Reparatur des Laserbearbeitungskopfs 30 zu veranlassen; die Alarmmeldung kann akustisch, optisch oder auch elektronisch erfolgen.

Die **Fig. 2a** zeigt ebenfalls in einem schematischen Längsschnitt eine zweite, detailliertere Ausführungsform eines erfindungsgemäßen Laserbearbeitungskopfes 30, im Bereich des oberen Teils 33 des Strahlführungsgehäuses 111. Es werden nur die wesentlichen Besonderheiten gegenüber der schematischen Ausführungsform von Fig. 1 erläutert.

Die Schwenkeinheit 112 ist hier mit der Schwenkwelle 41 in einem Kugellager 115 im Strahlführungsgehäuse 111 gelagert. Die zweite Kühleinheit 103 ist mit Kühlwasserleitungen 116 versehen.

Der Photosensor 108 der Überwachungseinrichtung 106 ist, ebenso wie die die Elektronik der Überwachungseinrichtung 106, außerhalb des Strahlführungsgehäuses 111 angeordnet. In das Strahlführungsgehäuse 111 ist eine Bohrung 116 eingebracht, in die ein Lichtleiter 117 eingeklebt ist; der Photosensor 108 blickt auf das hintere Ende des Lichtleiters 117. Dadurch kann das Innere des Strahlungsführungsgehäuses 111 besonders rein gehalten werden.

Der Temperatursensor 107 ist in eine Durchbruchöffnung 118 des Strahlführungsgehäuses 111 eingesetzt und mit einer elastischen Dichtung 119 abgedichtet. Der Temperatursensor 107 blickt auf die geschwärzte Messoberfläche 110, die mittels so genanntem Schwarz-Signieren mit einem Ultrakurzpuls-Laser erzeugt wurde. Die solchermaßen strukturierte Messoberfläche 110 ist schwarz (mit einem Emissionskoeffizienten für Wärmestrahlung von 0,7 oder mehr), nicht ausgasend und zudem sehr glatt (beispielsweise mit einem Mittenrauwert Ra von 1 µm oder weniger) und damit leicht zu reinigen. Mit dem Temperatursensor 107 wird berührungslos die Temperatur der Schwenkeinheit 112 überwacht.

In der gezeigten Ausführungsform blickt der Lichtleiter 117 mit seinem vorderen Ende ebenfalls auf die geschwärzte Messoberfläche 110, dies muss aber nicht für alle Positionen der Schwenkeinheit 112 so sein.

**Die** **Fig. 2b** zeigt eine erste Kühleinheit 101, wie sie in einem erfindungsgemäßen Laserbearbeitungskopf 30, wie in Fig. 1 dargestellt, eingesetzt werden kann.

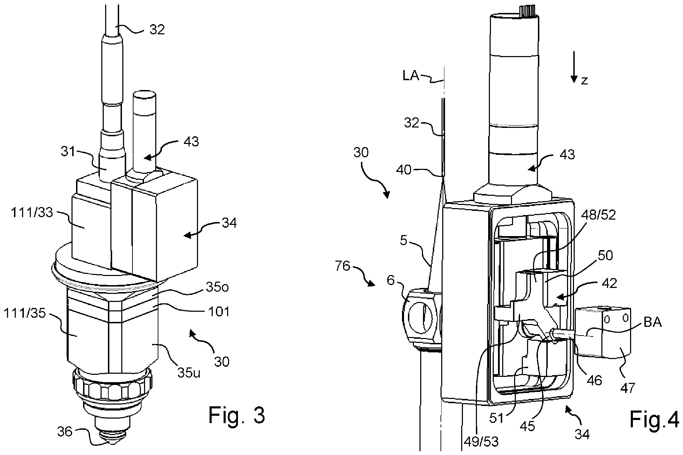

Die erste Kühleinheit 101, die zwischen dem oberen Teil 33 und dem unteren Teil 35 (siehe Fig. 1) oder innerhalb des unteren Teils 35 (siehe Fig. 3) des Strahlführungsgehäuses 111 eingebaut wird, ist näherungsweise plattenförmig gebaut und wird mit Wasser gekühlt, vgl. die Kühlwasserleitungen 116. Die erste Kühleinheit 101 nimmt, mit Ausnahme eines Durchbruchs 120 für den Laserstrahl, den gesamten Querschnitt des Laserbearbeitungskopfs senkrecht zur Strahlachse ein. Die erste Kühleinheit 101 besteht zudem aus einem Metall, etwa Kupfer oder Stahl, so dass eine gute Wärmeleitung in der Plattenebene gegeben ist. Dadurch werden der untere Teil und der obere Teil des Strahlführungsgehäuses bzw. des Laserbearbeitungskopfes (oder ein unterer Abschnitt 35u des unteren Teils 35 von einem oberen Abschnitt 35o des unteren Teils 35 und dem oberen Teil 33, vgl. Fig. 3) voneinander thermisch weitgehend isoliert. Wärmeenergie, die im unteren Teil (oder im unteren Abschnitt 35u des unteren Teils 35, etwa nahe der Düse 36) freigesetzt oder eingetragen wurde, trägt nur wenig zur Erwärmung der schwer zu kühlenden Schwenkeinheit im oberen Teil bei. Dadurch können die Schwenkeinheit und die darauf angeordneten Kollimationslinsen gut geschützt bzw. bei niedriger Temperatur betrieben werden.

In der Regel werden die erste Kühleinheit 101 und die zweite Kühleinheit 103 in Reihe mit Kühlwasser versorgt (nicht näher dargestellt).

Die Figuren 3 bis 7 illustrieren einen erfindungsgemäßen Laserbearbeitungskopf 30 in einer dritten Ausführungsform, wobei vor allem die mechanische Funktion des Linsenwechselsystems 76 illustriert wird, wobei in der gezeigten Ausführungsform sowohl eine Drehung als auch ein axiales Verfahren des Schwenkrahmens möglich ist.

Die **Fig. 3** zeigt in einer schematischen Außenansicht den Laserbearbeitungskopf 30. Dieser umfasst ein Anschlussstück 31 für eine Lichtleitfaser 32, in welchem ein Ende der Lichtleitfaser 32 angeordnet ist, aus welchem ein divergenter Laserstrahl austritt (verdeckt in Figur 3).

Weiterhin umfasst der Laserbearbeitungskopf 30 ein Strahlführungsgehäuse 111 mit einem oberen Gehäuseteil 33, in welchem in der gezeigten Ausführungsform der Schwenkrahmen (hier auch einfach bezeichnet als Rahmen) des Linsenwechselsystems untergebracht ist, auf welchem zwei Kollimationslinsen gehalten sind. Der im oberen Gehäuseteil 33 (auch einfach oberer Teil genannt) propagierende Laserstrahl wird von der im Strahlengang befindlichen Kollimationslinse kollimiert (in Figur 3 wiederum verdeckt). An diesem oberen Gehäuseteil 33 ist ein Motoriksystem (auch genannt Einstellmechanismus) 34 angeordnet, mit dem der Schwenkrahmen im oberen Gehäuseteil 33 gedreht und verfahren werden kann.

Weiterhin umfasst das Strahlführungsgehäuse 111 des Laserbearbeitungskopfs 30 ein unteres Gehäuseteil 35, in welchem eine Fokussierlinse untergebracht ist, die den im unteren Gehäuseteil 35 propagierenden Laserstrahl fokussiert (in Figur 3 wiederum verdeckt). Am unteren Ende des unteren Gehäuseteils 35 (auch einfach genannt unterer Teil) ist eine Düse 36 angebracht, mit der der vom Laserstrahl bearbeitete Bereich am Werkstück einem Gasstrom ausgesetzt werden kann, etwa einem Schneidgasstrom zum Austreiben der Schmelze aus dem Schneidspalt oder und/oder einem Inertgasstrom, um Oxidationen am Werkstück zu verhindern. Das Werkstück wird unterhalb der Düse 36 positioniert (nicht näher dargestellt). In der gezeigten Ausführungsform ist weiterhin eine erste Kühleinheit 101 innerhalb des unteren Teils 35 eingebaut, so dass die erste Kühleinheit den unteren Teil 35 in einen unteren Abschnitt 35u und einen oberen Abschnitt 35o aufteilt und thermisch voneinander trennt.

Man beachte, dass beim erfindungsgemäßen Laserbearbeitungskopf 30 der Strahlengang des Laserstrahls bis zur Düse 36 vollständig umschlossen ist. Für das Drehen oder Verfahren des Rahmens im oberen Gehäuseteil 33 (d.h. für einen Wechsel oder eine Justage der Kollimationslinsen) braucht der Strahlengang (insbesondere die Gehäuse 33, 35) nicht geöffnet zu werden.

Die **Figuren 4****,** **5 und 6** illustrieren den Bereich des oberen Gehäuseteils 33 und des Motoriksystems (Einstellmechanismus) 34 des Laserbearbeitungskopfs 30 von Fig. 3 näher, wobei einige Abdeckungen zum besseren Verständnis entfernt sind. Das Motoriksystem (Einstellmechanismus) 34 zusammen mit dem linsentragenden Rahmen (Schwenkrahmen) 6 kann als das Linsenwechselsystem 76 bezeichnet werden.

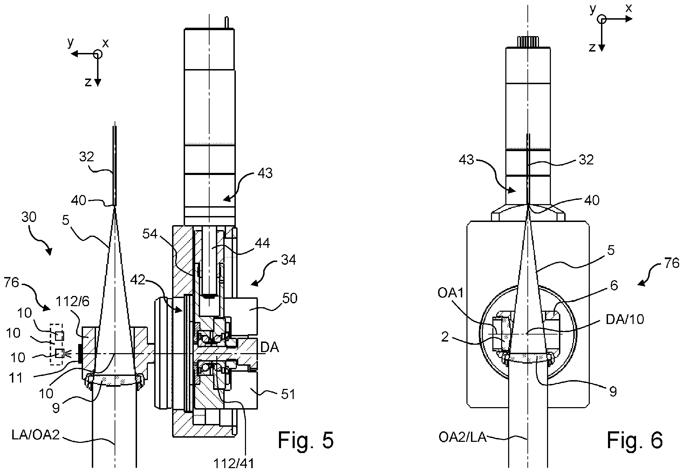

Der Laserbearbeitungskopf 30 verfügt erfindungsgemäß über eine Überwachungseinrichtung 106, die für eine Temperaturüberwachung mit einem Temperatursensor 107 versehen ist, der auf eine geschwärzte Messoberfläche 110 des Schwenkrahmens 6 gerichtet ist. Die Überwachungseinrichtung 106 ist hier weiterhin mit einem Photosensor 108 versehen, der zur Messung von gestreutem und reflektiertem Laserlicht in das Innere des oberen Teils des Strahlführungsgehäuses bzw. auf den Schwenkrahmen 6 gerichtet ist (nur dargestellt in Fig. 5).

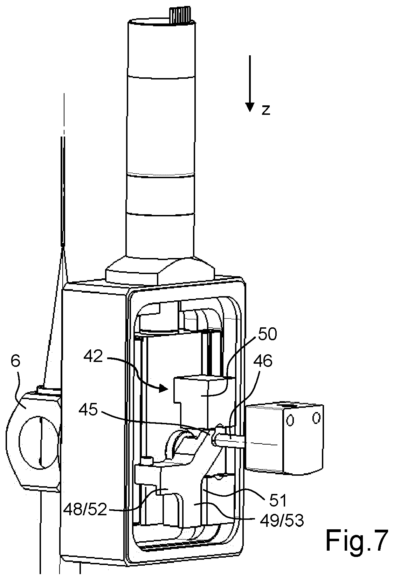

Der an einem Ende 40 der Lichtleitfaser 32 austretende Laserstrahl 5 tritt durch den hier näherungsweise würfelförmigen Rahmen 6, wobei der Laserstrahl 5 in der in Fig. 5 und 6 gezeigten Drehposition des Rahmens 6 von einer Kollimationslinse 9 mit langer Brennweite an der Unterseite des Rahmens 6 kollimiert wird. Im Rahmen 6 ist weiterhin eine Kollimationslinse 2 mit kurzer Brennweite gehalten, vgl. Fig. 6. Durch Drehung des Rahmens 6 um seine Drehachse DA, die mittig in der Schwenkwelle 41 verläuft, können die Kollimationslinsen 9, 2 im Strahlengang des Laserstrahls 5 ausgetauscht werden. Die Kollimationslinse 2 kann insbesondere durch Drehen des Rahmens 6 ausgehend von der Drehposition in Fig. 6 im Uhrzeigersinn um 90° in den Laserstrahl 5 gebracht werden, so dass diese dann an der Oberseite des Rahmens 6 angeordnet ist (letzteres nicht dargestellt, vgl. aber Fig. 7 zur verdrehten Stellung). Die Drehachse DA verläuft in der gezeigten Ausführungsform durch den Kreuzungspunkt 10 der optischen Achsen OA1, OA2 der Kollimationslinsen 2, 9, die sich am Kreuzungspunkt 10 unter einem Winkel von 90° schneiden.

Der Schwenkrahmen 6 ist starr mit der Schwenkwelle 41 verbunden; beide zusammen bilden die Schwenkeinheit 112. Die Schwenkwelle 41 ist auf einem Schlitten 42 drehbar um die Achse DA spielfrei gelagert. Der Schlitten 42 ist mit einem Motor 43, der eine Kugelrollspindel 44 antreibt, linear parallel zur Laserstrahlachse (auch einfach Strahlachse genannt) LA, also in z-Richtung, verfahrbar und zu diesem Zweck an wenigstens einer Schiene 54 des Laserbearbeitungskopfs 30 spielfrei gelagert. Durch Verfahren des Schlittens 42, zusammen mit der Schwenkeinheit 112, kann die Fokuslage der eingeschwenkten (aktiven) Kollimationslinse 2, 9 eingestellt werden.

In der gezeigten Ausführungsform kann mit dem Motor 43, der den Schlitten 42 antreibt, auch eine Drehung des Rahmens 6 bewirkt werden. Dazu ist am hinteren Ende der Schwenkwelle 41 eine Gabel 45 angeordnet, in die ein Bolzen 46 eines Kurzhubzylinders 47 eingreifen kann (nur in Fig. 4 dargestellt). Die Gabel 45 und der Bolzen 46 sind radial von der Drehachse DA beabstandet. Mit dem Kurzhubzylinder 47 kann der Bolzen 46 entlang einer Bolzenachse BA parallel zur Drehachse DA in die Gabel 45 eingefahren werden und aus der Gabel 45 herausgefahren werden. Der Kurzhubzylinder 47 ist typischerweise starr am Laserbearbeitungskopf 30 befestigt und bewegt sich insbesondere nicht mit dem Schlitten 42.

Solange der Bolzen 46 aus der Gabel 45 herausgefahren ist, kann mit dem Motor 43 der Schlitten 42 und damit auch der Rahmen 6 entlang der z-Richtung verfahren werden, um die Lage des Fokuspunkts des Laserstrahls 5 am Werkstück zu verändern, ohne dass dies Auswirkung auf die Drehposition des Rahmens 6 hat.

Wenn der Bolzen 46 in die Gabel 45 eingefahren ist, kann mit einer linearen Bewegung des Schlittens 42 - und damit auch einer Bewegung der Schwenkwelle 41, auf der die Gabel 45 befestigt ist, eine Drehung der Schwenkwelle 41 bewirkt werden. Wird beispielsweise in der in Fig. 4 gezeigten Drehstellung des Rahmens 6 bzw. der Gabel 45 der Schlitten 42 nach unten gefahren, so erzwingt der mit dem Schlitten 42 nicht mitfahrende Bolzen 46 eine Drehung der Schwenkwelle 41 mitsamt der Gabel 45 gegen den Uhrzeigersinn. Man beachte, dass dabei der Bolzen 46 relativ zur Gabel 45 entlang der Gabel 45 verfährt. Die **Fig. 7** zeigt den Laserbearbeitungskopf von Fig. 4, nachdem der Schlitten 42 bei in die Gabel 45 eingefahrenem Bolzen 46 in z-Richtung nach unten verfahren wurde, wodurch sich die Gabel 45 (und damit auch die Schwenkwelle und der Rahmen 6) um 90° gedreht haben.

Es sei angemerkt, dass für ein Einfahren des Bolzens 46 in die Gabel 45, also zur Vorbereitung eines Linsenwechsels, der Schlitten 42 gegebenenfalls zunächst in eine z-Position verfahren werden muss, in der die Gabel 45 gegenüber dem Bolzen 46 liegt.

Wie am besten aus Fig. 4 und Fig. 7 ersichtlich, sind am hinteren Ende der Schwenkwelle 41 weiterhin zwei Anlageelemente 48, 49 ausgebildet, mit denen Endpositionen der Schwenkwelle 41 definiert und fixiert werden. In der in Fig. 4 gezeigten Drehposition liegt das Anlageelement 48 an einem Anschlag 50 des Schlittens 42 an. Das Anlageelement 48 ist magnetisch und wirkt dadurch als ein Fixiermittel 52 gegenüber dem ferromagnetischen (oder ebenfalls magnetischen) Anschlag 50. Das Anlageelement 49, das ebenfalls magnetisch ist und ebenfalls daher als Fixiermittel 53 dienen kann, kann nach Verschwenkung der Schwenkwelle 41 am ferromagnetischen (oder ebenfalls magnetischen) Anschlag 51 des Schlittens 42 angelegt und festgehalten werden, wie in Fig. 7 gezeigt. Die beiden durch die Anschläge 50, 51 definierten Drehpositionen der Schwenkwelle 41 liegen um 90° auseinander, entsprechend dem Winkel zwischen den optischen Achsen OA1, OA2 der Kollimationslinsen 2, 9.

Die Auswahl der Linse am Rahmen 6 (also die Drehstellung der Schwenkwelle 41) und die z-Position der benutzten Linse (also die Verschiebeposition bezüglich der z-Richtung des Schlittens 42) kann von einer Maschinensteuerung, etwa über gespeicherte Parametertabellen, ohne Einflussnahme eines Bedieners erfolgen, so dass bei Auswahl eines zu bearbeitenden Werkstücks (typischerweise eines Blechs) automatisch ein passendes Abbildungsverhältnis sowie eine passende Fokuslage des Laserstrahls 5 gewählt und eingestellt wird.

### Bezugszeichenliste

- 2: Kollimationslinse
- 5: Laserstrahl
- 6: Schwenkrahmen / Rahmen
- 9: Kollimationslinse
- 10: Kreuzungspunkt
- 31: Anschlussstück
- 32: Lichtleitfaser
- 33: oberer Gehäuseteil / oberer Teil
- 34: Motoriksystem / Einstellmechanismus
- 35: unterer Gehäuseteil / unterer Teil
- 35o: oberer Abschnitt des unteren Gehäuseteils / unteren Teils
- 35u: unterer Abschnitt des unteren Gehäuseteils / unteren Teils
- 36: Laseraustrittsdüse / Düse
- 40: Ende der Lichtleitfaser
- 41: Schwenkwelle
- 42: Schlitten
- 43: Motor
- 44: Kugelrollspindel
- 45: Gabel
- 46: Bolzen
- 47: Kurzhubzylinder
- 48: Anlageelement
- 49: Anlageelement
- 50: Anschlag
- 51: Anschlag
- 52: Fixiermittel
- 53: Fixiermittel
- 54: Schiene
- 76: Linsenwechselsystem
- 101: erste Kühleinheit
- 102: Fokussierlinse
- 103: zweite Kühleinheit
- 106: Überwachungseinrichtung
- 107: Temperatursensor
- 108: Photosensor
- 109: Schutzglas
- 110: geschwärzte Messoberfläche
- 111: Strahlführungsgehäuse
- 112: Schwenkeinheit
- 113: Rückseite
- 115: Kugellager
- 116: Bohrung
- 117: Lichtleiter
- 118: Durchbruchöffnung (für Thermopile)
- 119: elastische Dichtung
- 120: Durchbruchöffnung (zweite Kühleinheit)
- BA: Bolzenachse
- DA: Drehachse (Schwenkeinheit)
- LA: Laserstrahlachse / Strahlachse
- OA1: optische Achse (Kollimationslinse 2)
- OA2: optische Achse (Kollimationslinse 9)

## Patentansprüche

1. Laserbearbeitungskopf (30), umfassend
- ein Strahlführungsgehäuse (111) für einen sich entlang einer Strahlachse (LA) ausbreitenden Laserstrahl (5),
- eine Schwenkeinheit (112), umfassend eine Schwenkwelle (41) und einen Schwenkrahmen (6), der starr an der Schwenkwelle (41) befestigt ist und der im Strahlführungsgehäuse (111) angeordnet ist,
- einen Einstellmechanismus (34), mit dem die Schwenkeinheit (112) gegenüber dem Strahlführungsgehäuse (111) um die Schwenkwelle (41) gedreht werden kann,
- wenigstens zwei Kollimationslinsen (2, 9), die am Schwenkrahmen (6) befestigt sind, und die durch Drehen der Schwenkeinheit (112) wahlweise in die Strahlachse (LA) des Laserstrahls (5) gebracht werden können,
- und wenigstens eine Fokussierlinse (102) in der Strahlachse (LA) des Laserstrahls (5);
**dadurch gekennzeichnet,**
**dass** der Laserbearbeitungskopf (30) eine Überwachungseinrichtung (106) aufweist, mit der eine Temperatur der Schwenkeinheit (112) messbar ist.

2. Laserbearbeitungskopf (30) nach Anspruch 1, **dadurch gekennzeichnet, dass** die Überwachungseinrichtung (106) eine lokale Temperatur am Schwenkrahmen (6) misst.

3. Laserbearbeitungskopf (30) nach Anspruch 1 oder 2, **dadurch gekennzeichnet, dass** die Überwachungseinrichtung (106) einen berührungslos messenden Temperatursensor (107) aufweist, insbesondere einen Thermopile-Sensor.

4. Laserbearbeitungskopf (30) nach Anspruch 3, **dadurch gekennzeichnet, dass** der berührungslos messende Temperatursensor (107) auf eine geschwärzte Messoberfläche (110) an der Schwenkeinheit (112) gerichtet ist,
insbesondere wobei die Schwenkeinheit (112) im Übrigen ganz oder teilweise vergoldet ist.

5. Laserbearbeitungskopf (30) nach Anspruch 4, **dadurch gekennzeichnet, dass**
die geschwärzte Messoberfläche (110) durch Schwarz-Signieren mit einem Ultrakurzpuls-Laser erzeugt ist.

6. Laserbearbeitungskopf (30) nach einem der vorhergehenden Ansprüche, **dadurch gekennzeichnet, dass** mit der Überwachungseinrichtung (106) weiterhin gestreute Laserstrahlung im Strahlführungsgehäuse (111) im Bereich der Schwenkeinheit (6) messbar ist.

7. Laserbearbeitungskopf (30) nach Anspruch 6, **dadurch gekennzeichnet, dass** die Überwachungseinrichtung (106) einen Photosensor (108) aufweist, der direkt oder indirekt auf den Schwenkrahmen (6), insbesondere auf einen Innenraum des Schwenkrahmens (6), gerichtet ist.

8. Laserbearbeitungskopf (30) nach Anspruch 6 oder 7, **dadurch gekennzeichnet, dass** das Strahlführungsgehäuse (111) eine Bohrung (116) aufweist, in die ein Lichtleiter (117) eingesetzt und abdichtend verklebt ist, und dass mit der Überwachungseinrichtung (106) die gestreute Laserstrahlung durch den Lichtleiter (117) hindurch messbar ist.

9. Laserbearbeitungskopf (30) nach einem der vorhergehenden Ansprüche, **dadurch gekennzeichnet,**
**dass** der Laserbearbeitungskopf (30) eine erste Kühleinheit (101) und eine zweite Kühleinheit (102) aufweist,
**dass** die erste Kühleinheit (101) zwischen einem unteren Teil (35) des Strahlführungsgehäuses (111), der die wenigstens eine Fokussierlinse (102), ein Schutzglas (109) und eine Laseraustrittsdüse (36) umfasst, und einem oberen Teil (33) des Strahlführungsgehäuses (111), der die Überwachungseinrichtung (106) und die Schwenkeinheit (112) umfasst, angeordnet ist,
und **dass** die zweite Kühleinheit (103) an einer Außenseite des oberen Teils (33) des Strahlführungsgehäuses (111) angeordnet ist.

10. Laserbearbeitungskopf (30) nach Anspruch 10, **dadurch gekennzeichnet, dass** die erste Kühleinheit (101) im Wesentlichen plattenförmig ausgebildet ist uns sich über den gesamten Querschnitt des Strahlführungsgehäuses (111) senkrecht zur Strahlachse (LA), mit Ausnahme eines Durchbruchs (120) für den Laserstrahl (5), erstreckt.

11. Laserbearbeitungskopf (30) nach Anspruch 10 oder 11, **dadurch gekennzeichnet, dass** die zweite Kühleinheit (103) an einer Seitenfläche des Strahlführungsgehäuses (111) angeordnet ist, insbesondere gegenüberliegend zum Einstellmechanismus (34),
und dass die zweite Kühleinheit (103) in Richtung der Strahlachse (LA) zumindest mit einem Teil des Schwenkrahmens (6), und bevorzugt auch zumindest mit einem Teil einer jeweiligen in die Strahlachse (LA) geschwenkten Kollimationslinse (2, 9), überlappt.

12. Laserbearbeitungskopf (30) nach einem der Ansprüche 10 bis 12,
**dadurch gekennzeichnet, dass** die beiden Kühleinheiten (101, 103) mit Wasser gekühlt sind, insbesondere wobei die beiden Kühleinheiten (101, 103) in Reihe geschaltet sind.

13. Laserbearbeitungskopf (30) nach einem der vorhergehenden Ansprüche, **dadurch gekennzeichnet, dass** der Einstellmechanismus (34) umfasst
- zwei Anschläge (50, 51) für zwei Drehpositionen der Schwenkeinheit (112), in denen jeweils eine der Kollimationslinsen (2, 9) in die Strahlachse (LA) des Laserstrahls (5) eingeschwenkt ist, und
- Fixiermittel (52, 53), insbesondere magnetische Fixiermittel (52, 53), mit denen die Schwenkeinheit (112) in den beiden Drehpositionen fixiert werden kann.

14. Verwendung eines Laserbearbeitungskopfs (30) nach einem der vorhergehenden Ansprüche,
wobei ein Laserstrahl (5) in den Laserbearbeitungskopf (30) eingespeist wird und mit dem Laserbearbeitungskopf (30) auf ein zu bearbeitendes Werkstück gerichtet wird,
wobei mit der Überwachungseinrichtung (106) eine Temperatur der Schwenkeinheit (112) überwacht wird,
und wobei der Laserstrahl (5) abgeschaltet wird, wenn die Temperatur der Schwenkeinheit (112) einen vorgegebenen Temperatur-Grenzwert übersteigt.

15. Verwendung nach Anspruch 14,
wobei mit der Überwachungseinrichtung (106) auch eine Stärke von gestreutem Laserlicht im Strahlführungsgehäuse (111) überwacht wird, und wobei der Laserstrahl (5) ebenfalls abgeschaltet wird, wenn eine gemessene Stärke von gestreutem Laserlicht einen vorgegebenen Streulicht-Grenzwert übersteigt.
